# EUROPÄISCHE PATENTSCHRIFT

(11) **EP 4 086 439 B1**
(45) Veröffentlichungstag und Bekanntmachung des Hinweises auf die Patenterteilung: **08.05.2024**
(21) Anmeldenummer: 22166425.3
(22) Anmeldetag: 04.04.2022
(51) Int. Cl.: F01N 3/20, F01N 3/28, F01N 13/00

(54) **ABGASBEHANDLUNGSMODUL**
EXHAUST GAS TREATMENT MODULE
MODULE DE TRAITEMENT DES GAZ D'ÉCHAPPEMENT

(30) Priorität: 06.05.2021 DE 102021111759
(43) Veröffentlichungstag der Anmeldung: 09.11.2022
(73) Patentinhaber: Purem GmbH, 66539 Neunkirchen (DE)
(72) Erfinder: Brenner, Holger, Stuttgart (DE)
(74) Vertreter: Ruttensperger Lachnit Trossin Gomoll

(56) Entgegenhaltungen:
- DE-A1-102020 007 553
- JP-B2- 5 057 944
- US-B2- 8 707 687
- US-B2- 8 713 925

## Beschreibung

Die vorliegende Erfindung betrifft ein Abgasbehandlungsmodul für eine Abgasanlage einer Brennkraftmaschine, welches insbesondere in Nutzkraftfahrzeugen zur Verminderung des Schadstoffausstoßes eingesetzt werden kann.

Zur Senkung des Stickoxidanteils in dem von einer Diesel-Brennkraftmaschine ausgestoßenen Abgas ist es bekannt, in das Abgas eine Harnstoff/Wasser-Lösung als Reaktionsmittel einzuspritzen, um in einer stromabwärts der Einspritzstelle folgenden SCR-Katalysatoranordnung eine zur Minderung des Stickoxidanteils führende selektive katalytische Reduktion durchzuführen.

Ein Abgasbehandlungsmodul gemäß dem Oberbegriff des Anspruchs 1 ist aus der DE 10 2020 007 553 A1 bekannt. Bei diesem bekannten Abgasbehandlungsmodul sind in Richtung einer Abgasbehandlungsmodullängsachse aufeinanderfolgend eine erste Mischstrecke mit einer ersten Reaktionsmittelabgabeanordnung zum Abgeben eines Reduktionsmittels in die erste Mischstrecke, eine auf die erste Mischstrecke folgende erste Abgasbehandlungsanordnung mit einer SCR-Katalysatoreinheit, eine zweite Mischstrecke mit einer zweiten Reaktionsmittelabgabeanordnung zum Abgeben eines Reduktionsmittels in die zweite Mischstrecke sowie eine auf die zweite Mischstrecke folgende zweite Abgasbehandlungsanordnung mit einer SCR-Katalysatoreinheit angeordnet.

Aus der US 8,7113,925 B2 ist ein Abgasbehandlungsmodul bekannt, bei welchem einander in Richtung einer Abgasbehandlungsmodullängsachse überlappend und in Abgasströmungsrichtung aufeinander folgend eine erste Abgasbehandlungsanordnung mit einer Oxidationskatalysatoreinheit und einer Partikelfiltereinheit, eine Mischstrecke mit einer Reaktionsmittelabgabeanordnung zum Abgeben eines Reduktionsmittels in die Mischstrecke sowie eine auf die Mischstrecke folgende zweite Abgasbehandlungsanordnung mit mehreren SCR-Katalysatoreinheiten angeordnet.

Es ist die Aufgabe der vorliegenden Erfindung, ein Abgasbehandlungsmodul für eine Abgasanlage einer Brennkraftmaschine vorzusehen, welches bei kompakter Bauart zu einer effizienten Minderung des Schadstoffgehalts in dem von einer Brennkraftmaschine ausgestoßenen und zur Umgebung abgegebenen Abgas führt.

Erfindungsgemäß wird diese Aufgabe gelöst durch ein Abgasbehandlungsmodul für eine Abgasanlage einer Brennkraftmaschine gemäß Anspruch 1. Dieses umfasst in einer Abgasströmungsrichtung aufeinander folgend:
- eine erste Mischstrecke mit einer ersten Reaktionsmittelabgabeanordnung in einem stromaufwärtigen Endbereich der ersten Mischstrecke und einem in Richtung einer ersten Mischstreckenlängsachse langgestreckten ersten Mischkanal,
- eine in Richtung einer ersten Abgasbehandlungsanordnungslängsachse langgestreckte erste Abgasbehandlungsanordnung mit einem mit einem stromabwärtigen Endbereich der ersten Mischstrecke verbundenen stromaufwärtigen Endbereich,
- eine zweite Mischstrecke mit einer zweiten Reaktionsmittelabgabeanordnung in einem mit einem stromabwärtigen Endbereich der ersten Abgasbehandlungsanordnung verbundenen stromaufwärtigen Endbereich der zweiten Mischstrecke und einem in Richtung einer zweiten Mischstreckenlängsachse langgestreckten zweiten Mischkanal,
- eine in Richtung einer zweiten Abgasbehandlungsanordnungslängsachse langgestreckte zweite Abgasbehandlungsanordnung mit einem mit einem stromabwärtigen Endbereich der zweiten Mischstrecke verbundenen stromaufwärtigen Endbereich und einem zur Abgabe von Abgas oder/und Reaktionsmittel offenen stromabwärtigen Endbereich

Die erste Mischstreckenlängsachse, die erste Abgasbehandlungsanordnungslängsachse, die zweite Mischstreckenlängsachse und die zweite Abgasbehandlungsanordnungslängsachse können zueinander oder/und zu einer Abgasbehandlungsmodullängsachse im Wesentlichen parallel sein. Erfindungsgemäß überlappen die erste Mischstrecke, die erste Abgasbehandlungsanordnung, die zweite Mischstrecke und die zweite Abgasbehandlungsanordnung einander in Richtung der Abgasbehandlungsmodullängsachse wenigstens bereichsweise.

Grundsätzlich zeichnet das erfindungsgemäß aufgebaute Abgasbehandlungsmodul sich dadurch aus, dass es in Strömungsrichtung aufeinanderfolgend zwei Abgasbehandlungsstrecken jeweils mit einer Mischstrecke, in welcher ein Gemisch aus Abgas und Reaktionsmittel erzeugt wird, und einer Abgasbehandlungsanordnung umfasst. Somit kann die mit dem Gemisch aus Abgas und Reaktionsmittel durchzuführende katalytische Reaktion in dem Abgasbehandlungsmodul noch effizienter durchgeführt werden. Da weiterhin die verschiedenen Systembereiche der beiden Abgasbehandlungsstrecken so angeordnet sind, dass sie zueinander im Wesentlichen parallel bzw. einander axial überlappend liegen, wird eine das eingenommene Volumen effizient ausnutzende, kompakte Bauart erreicht.

Es ist darauf hinzuweisen, dass im Sinne der vorliegenden Erfindung die Angabe, dass zwei Systembereiche, also beispielsweise eine Mischstrecke und eine Abgasbehandlungsanordnung, miteinander verbunden sind, so zu verstehen ist, dass dadurch eine Strömungsverbindung hergestellt ist, welche das Strömen von Abgas bzw. eines Gemisches aus Abgas und Reaktionsmittel von einem der Systembereiche in den damit verbundenen anderen Systembereich ermöglicht. Zur Herstellung einer derartigen Verbindung bzw. Strömungsverbindung können mit den beiden zu verbindenden Systembereichen jeweils körperlich verbundene, beispielsweise gehäuseartige oder rohrartige Komponenten eingesetzt werden

Die effiziente Ausnutzung des zur Verfügung stehenden Bauraums wird dadurch unterstützt, dass die erste Mischstrecke, die erste Abgasbehandlungsanordnung, die zweite Mischstrecke und die zweite Abgasbehandlungsanordnung um die Abgasbehandlungsmodullängsachse aufeinanderfolgend angeordnet sind, so dass die erste Mischstrecke und die zweite Mischstrecke einander bezüglich der Abgasbehandlungsmodullängsachse im Wesentlichen diametral gegenüberliegen und die erste Abgasbehandlungsanordnung und die zweite Abgasbehandlungsanordnung einander bezüglich der Abgasbehandlungsmodullängsachse im Wesentlichen diametral gegenüberliegen. Die beiden Mischstrecken, welche quer zu ihrer jeweiligen Längsachse eine kleinere Abmessung aufweisen, als die beiden Abgasbehandlungsanordnungen, können somit in den in Umfangsrichtung bezüglich der Abgasbehandlungsmodullängsachse zwischen den beiden einander gegenüberliegend angeordneten Abgasbehandlungsanordnungen gebildeten Raumbereichen untergebracht werden.

Um auch in axialer Richtung bezüglich der Abgasbehandlungsmodullängsachse eine kompakte und den zur Verfügung stehenden Bauraum effizient ausnutzende Bauweise erreichen zu können, wird vorgeschlagen, dass der stromaufwärtige Endbereich der ersten Mischstrecke oder/und der stromabwärtige Endbereich der ersten Abgasbehandlungsanordnung oder/und der stromaufwärtige Endbereich der zweiten Mischstrecke oder/und der stromabwärtige Endbereich der zweiten Abgasbehandlungsanordnung im Wesentlichen im gleichen axialen Bereich bezüglich der Abgasbehandlungsmodullängsachse angeordnet sind, oder/und dass der stromabwärtige Endbereich der ersten Mischstrecke oder/und der stromaufwärtige Endbereich der ersten Abgasbehandlungsanordnung oder/und der stromabwärtige Endbereich der zweiten Mischstrecke oder/und der stromaufwärtige Endbereich der zweiten Abgasbehandlungsanordnung im Wesentlichen im gleichen axialen Bereich bezüglich der Abgasbehandlungsmodullängsachse angeordnet sind. Dies bedeutet also, dass wenigstens zwei der stromaufwärtigen Endbereiche bzw. wenigstens zwei der stromabwärtigen Endbereiche jeweils im Wesentlichen im gleichen axialen Bereich positioniert sind.

Zur Strömungsverbindung der verschiedenen aufeinanderfolgenden Systembereiche des Abgasbehandlungsmoduls kann ein den stromabwärtigen Endbereich der ersten Mischstrecke mit dem stromaufwärtigen Endbereich der ersten Abgasbehandlungsanordnung verbindendes erstes Strömungsumlenkgehäuse oder/und ein den stromabwärtigen Endbereich der ersten Abgasbehandlungsanordnung mit dem stromaufwärtigen Endbereich der zweiten Mischstrecke verbindendes zweites Strömungsumlenkgehäuse oder/und ein den stromabwärtigen Endbereich der zweiten Mischstrecke mit dem stromaufwärtigen Endbereich der zweiten Abgasbehandlungsanordnung verbindendes drittes Strömungsumlenkgehäuse vorgesehen sein.

Aufgrund der im Wesentlichen parallelen Anordnung der durch ein jeweiliges Strömungsumlenkgehäuse miteinander zu verbindenden Systembereiche erfolgt in jedem der Strömungsumlenkgehäuse eine Umlenkung im Wesentlichen um zweimal 90°, also etwa 180°. Um dies ohne wesentliche Strömungseinschnürung erreichen zu können, wird vorgeschlagen, dass wenigstens ein, vorzugsweise jedes Strömungsumlenkgehäuse von erstem Strömungsumlenkgehäuse, zweitem Strömungsumlenkgehäuse und drittem Strömungsumlenkgehäuse eine zusammen mit einer Gehäuseaußenwandung ein Strömungsumlenkvolumen begrenzende Gehäuseinnenwandung umfasst, wobei in der Gehäuseinnenwandung des wenigstens einen Strömungsumlenkgehäuses eine zu dem Strömungsumlenkvolumen führende Einlassöffnung und eine aus dem Strömungsumlenkvolumen führende Auslassöffnung des wenigstens einen Strömungsumlenkgehäuses vorgesehen sind.

Zur Unterstützung der kompakten Bauweise kann die zweite Reaktionsmittelabgabeanordnung an dem zweiten Strömungsumlenkgehäuse getragen sein.

Die Einleitung von Abgas in das Abgasbehandlungsmodul kann bei gleichermaßen kompakter Bauart dadurch erfolgen, dass der stromaufwärtige Endbereich der ersten Mischstrecke mit einem Einlass-Strömungsumlenkgehäuse verbunden ist, und dass die erste Reaktionsmittelabgabeanordnung an dem Einlass-Strömungsumlenkgehäuse getragen ist.

Dabei kann das Einlass-Strömungsumlenkgehäuse eine zusammen mit einer Gehäuseaußenwandung ein Einlassvolumen begrenzende Gehäuseinnenwandung umfassen, wobei in der Gehäuseinnenwandung des Einlass-Strömungsumlenkgehäuses eine aus dem Einlassvolumen in die erste Mischstrecke führende Auslassöffnung des Einlass-Strömungsumlenkgehäuses vorgesehen ist und die erste Reaktionsmittelabgabeanordnung an der Gehäuseaußenwandung des Einlass-Strömungsumlenkgehäuses getragen ist.

Es ist in diesem Zusammenhang darauf hinzuweisen, dass bei einem bzw. jedem Strömungsumlenkgehäuse bzw. dem Einlass-Strömungsumlenkgehäuse die jeweilige Gehäuseinnenwandung und die jeweilige Gehäuseaußenwandung als miteinander verbundene plattenartige bzw. schalenartige Bauteile, vorzugsweise Blechumformteile, bereitgestellt sein können. Selbstverständlich können derartige Umlenkgehäuse auch rohrartig ausgebildet sein oder können aus mehr als zwei Bauteilen zusammengesetzt sein, beispielsweise um komplexere Geometrien realisieren zu können.

Für eine effiziente Durchmischung von Abgas und Reaktionsmittel kann die erste Reaktionsmittelabgabeanordnung dazu eingerichtet sein, Reaktionsmittel im Wesentlichen in einer ersten Reaktionsmittel-Hauptabgaberichtung in den ersten Mischkanal abzugeben, wobei die erste Reaktionsmittel-Hauptabgaberichtung im Wesentlichen in Richtung der ersten Mischstreckenlängsachse orientiert ist oder/und die erste Reaktionsmittelabgabeanordnung Reaktionsmittel im Wesentlichen in einen zentralen Bereich des ersten Mischkanals abgibt.

Weiter kann hierfür vorgesehen sein, dass die zweite Reaktionsmittelabgabeanordnung dazu eingerichtet ist, Reaktionsmittel im Wesentlichen in einer zweiten Reaktionsmittel-Hauptabgaberichtung in den zweiten Mischkanal abzugeben, wobei die zweite Reaktionsmittel-Hauptabgaberichtung im Wesentlichen in Richtung der zweiten Mischstreckenlängsachse orientiert ist oder/und die zweite Reaktionsmittelabgabeanordnung Reaktionsmittel im Wesentlichen in einen zentralen Bereich des zweiten Mischkanals abgibt.

Dabei können die erste Reaktionsmittel-Hauptabgaberichtung und die zweite Reaktionsmittel-Hauptabgaberichtung zueinander im Wesentlichen parallel und gleich orientiert sein, wodurch insbesondere eine kompakte Bauart begünstigt werden kann, bei welcher gemäß den Prinzipien der vorliegenden Erfindung die erste Reaktionsmittelabgabeanordnung und die zweite Reaktionsmittelabgabeanordnung bezüglich der Abgasbehandlungsmodullängsachse im Wesentlichen im gleichen axialen Endbereich des Abgasbehandlungsmoduls angeordnet sind.

Für eine effiziente Abgasreinigung wird weiter vorgeschlagen, dass die erste Abgasbehandlungsanordnung wenigstens eine, vorzugsweise eine Mehrzahl von in Strömungsrichtung aufeinanderfolgend angeordneten Abgasbehandlungseinheiten umfasst, oder/und dass die die zweite Abgasbehandlungsanordnung wenigstens eine, vorzugsweise eine Mehrzahl von in Strömungsrichtung aufeinanderfolgend angeordneten Abgasbehandlungseinheiten umfasst.

Für den Einsatz in Verbindung mit einer Diesel-Brennkraftmaschine umfasst jede Abgasbehandlungsanordnung wenigstens eine SCR-Katalysatoreinheit.

Die Erfindung betrifft ferner eine Abgasbehandlungsanlage für ein Fahrzeug, umfassend wenigstens ein erfindungsgemäß aufgebautes Abgasbehandlungsmodul.

Die vorliegende Erfindung wird nachfolgend mit Bezug auf die beiliegenden Figuren detailliert beschrieben. Es zeigt:
- Fig. 1: ein Abgasbehandlungsmodul für eine Abgasanlage in Seitenansicht;
- Fig. 2: eine Axialansicht des Abgasbehandlungsmoduls der Fig. 1 in Blickrichtung II in Fig. 1;
- Fig. 3: eine Querschnittansicht des Abgasbehandlungsmoduls der Fig. 1, geschnitten längs einer Linie III-III in Fig. 1;
- Fig. 4: eine Längsschnittansicht des Abgasbehandlungsmoduls der Fig. 1, geschnitten längs einer Linie IV-IV in Fig. 2;
- Fig. 5: eine Längsschnittansicht des Abgasbehandlungsmoduls der Fig. 1, geschnitten längs einer Linie V-V in Fig. 2;
- Fig. 6: eine Längsschnittansicht des Abgasbehandlungsmoduls der Fig. 1, geschnitten längs einer Linie VI-VI in Fig. 2.

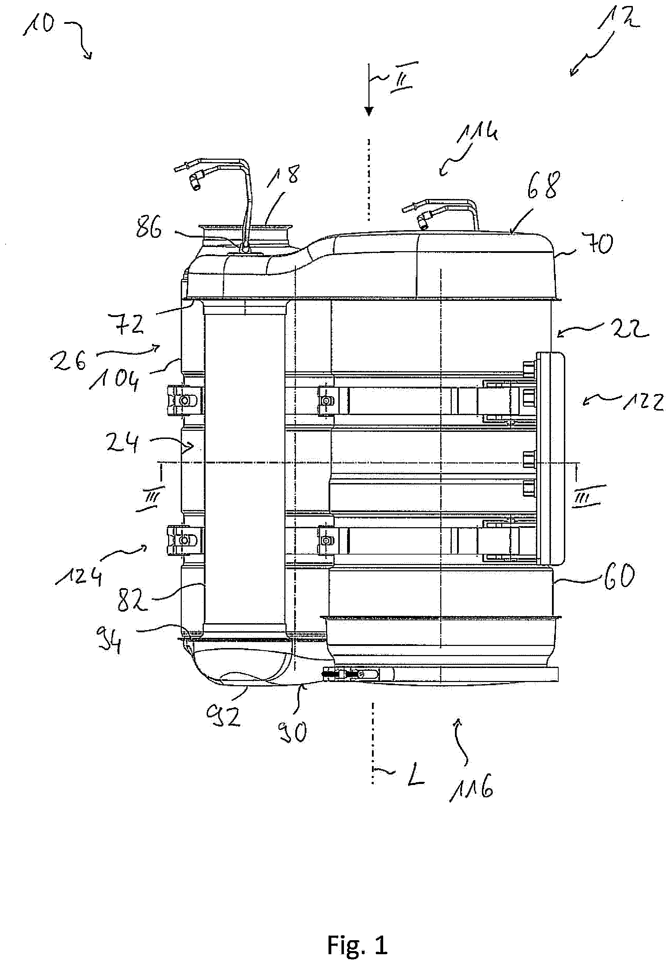

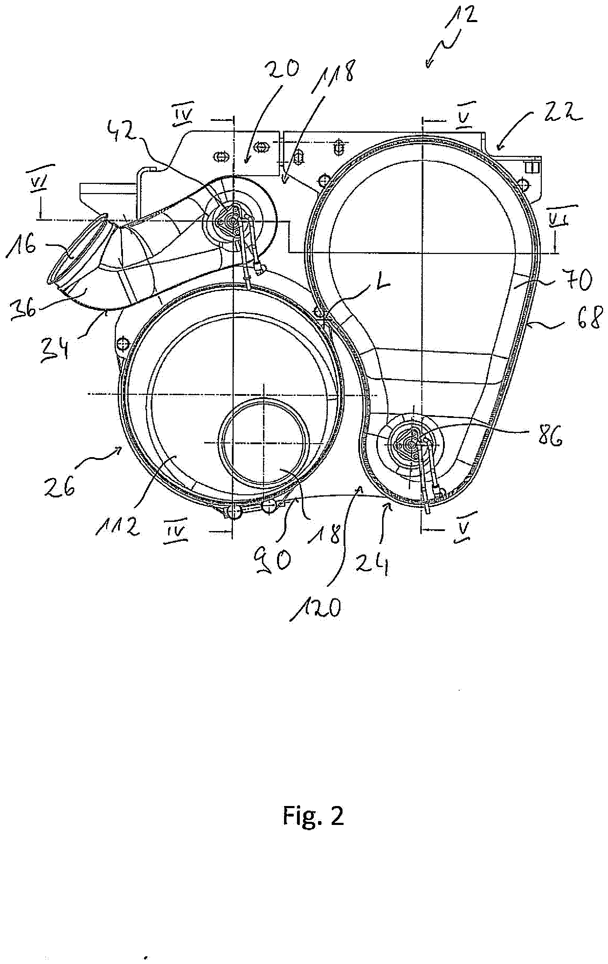

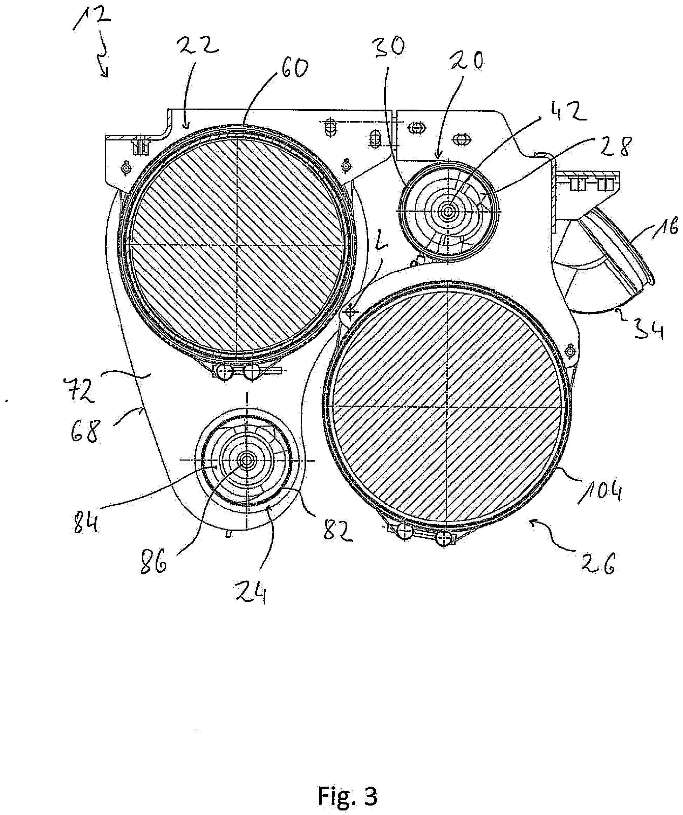

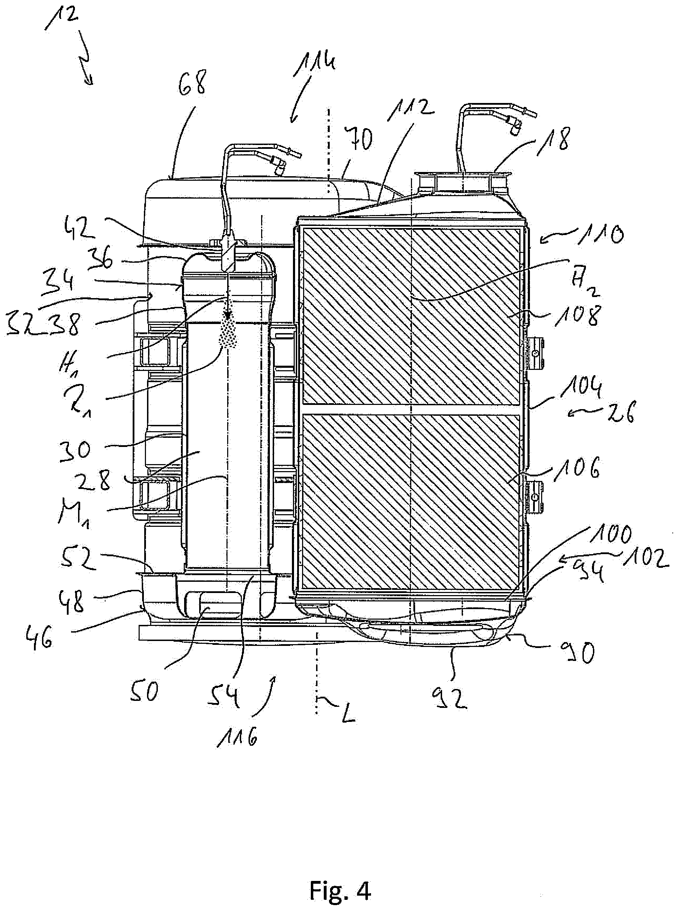

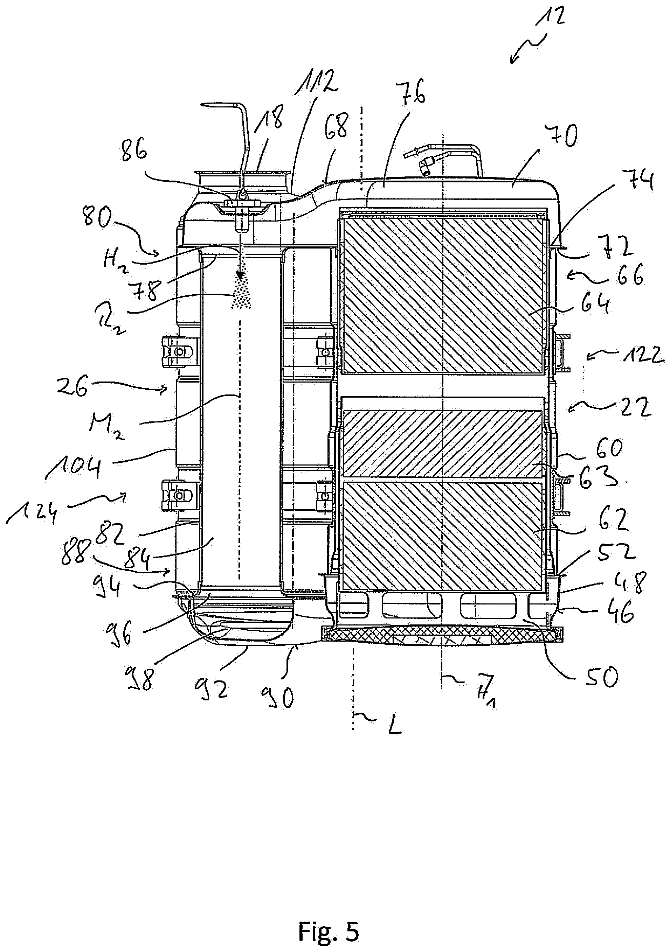

In den Fig. 1 bis 6 ist eine beispielsweise in einer Abgasanlage 10 einer Brennkraftmaschine in einem Nutzkraftfahrzeug einsetzbares Abgasbehandlungsmodul allgemein mit 12 bezeichnet. Das Abgasbehandlungsmodul 12 weist eine im Wesentlichen quaderartige bzw. würfelartige Außenumfangskontur auf und ist in Richtung einer Abgasbehandlungsmodullängsachse L langgestreckt. Die Abgasbehandlungsmodullängsachse L definiert im Wesentlichen auch einen Bereich der geometrischen Mitte des Abgasbehandlungsmoduls 12 quer zu dieser Abgasbehandlungsmodullängsachse L.

Das Abgasbehandlungsmodul 12 umfasst zwischen einem Abgaseinlass 16 und einem Abgasauslass 18 im Wesentlichen vier in einer Abgasströmungsrichtung aufeinanderfolgende Systembereiche. Dies sind eine auf den Abgaseinlass 16 folgende erste Mischstrecke 20, eine auf die erste Mischstrecke 20 folgende erste Abgasbehandlungsanordnung 22, eine auf die erste Abgasbehandlungsanordnung 22 folgende zweite Mischstrecke 24 und eine auf die zweite Mischstrecke 24 folgende und zum Abgasauslass 18 führende bzw. diesen bereitstellende zweite Abgasbehandlungsanordnung 26.

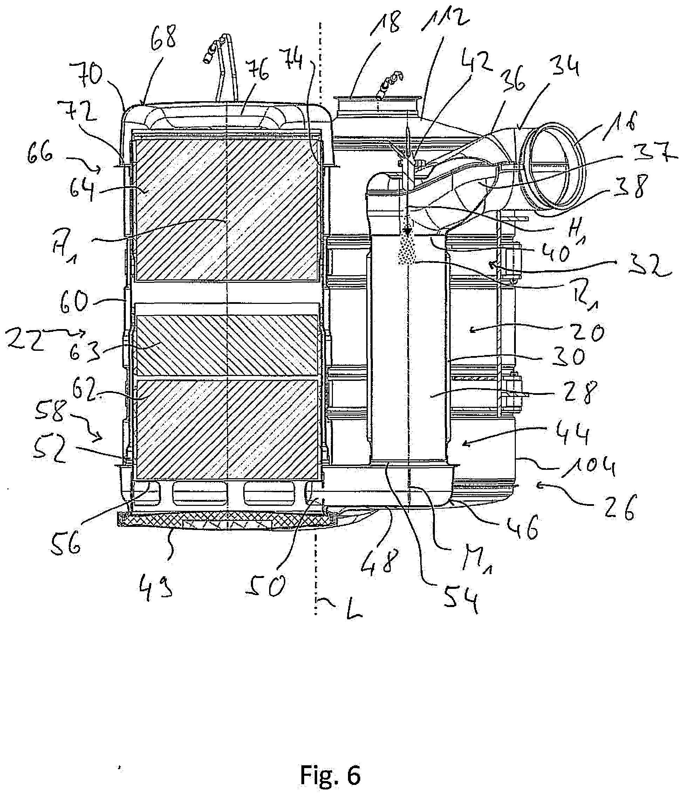

Die in Fig. 6 erkennbare erste Mischstrecke 20 umfasst ein in Richtung einer ersten Mischstreckenlängsachse M₁ langgestrecktes und einen ersten Mischkanal 28 bereitstellendes, beispielsweise zumindest bereichsweise doppelwandig ausgebildetes erstes Mischstreckenrohr 30. An einem stromaufwärtigen Endbereich 32 der ersten Mischstrecke 20 schließt das erste Mischstreckenrohr 30 an ein Einlass-Strömungsumlenkgehäuse 34 an. Das Einlass-Strömungsumlenkgehäuse 34 stellt den Abgaseinlass 16 bereit und ist mit einer Gehäuseaußenwandung 36 und einer Gehäuseinnenwandung 38 aufgebaut, die beispielsweise in einem Randbereich durch Verschweißung miteinander verbunden sein können und zusammen ein Einlassvolumen 37 begrenzen können. An der Gehäuseinnenwandung 38 ist eine Auslassöffnung 40 des Einlass-Strömungsumlenkgehäuses 34 vorgesehen, an welche das erste Mischstreckenrohr 30 bzw. der darin ausgebildete erste Mischkanal 28 anschließt und somit zum Einlassvolumen 37 offen ist.

An der äußeren Gehäusewandung 36 des Einlass-Umlenkgehäuses 34 ist eine allgemein als Injektor bezeichnete erste Reaktionsmittelabgabeanordnung 42 derart getragen, dass sie Reaktionsmittel R₁, beispielsweise eine Harnstoff/Wasser-Lösung, in einer ersten Reaktionsmittel-Hauptabgaberichtung H₁ im Wesentlichen in Richtung der ersten Mischstreckenlängsachse M₁ und im Wesentlichen zentral, also in einem quer zur ersten Mischstreckenlängsachse M₁ mittigen Bereich in die erste Mischstrecke 20 bzw. den ersten Mischstreckenkanal 28 eingibt. Dabei kann beispielsweise die erste Reaktionsmittel-Hauptabgaberichtung H₁ im Wesentlichen einer Mittenachse des von der ersten Reaktionsmittelabgabeanordnung 42 abgegebenen Sprühkegels des Reaktionsmittels R₁ entsprechen.

Ein stromabwärtiger Endbereich 44 der ersten Mischstrecke 20 bzw. des ersten Mischkanals 28 schließt an ein erstes Strömungsumlenkgehäuse 46 an. Das erste Strömungsumlenkgehäuse 46 ist beispielsweise mit einer im Wesentlichen schalenartigen Gehäuseaußenwandung 48 und einer zusammen mit dieser ein erstes Strömungsumlenkvolumen 50 begrenzenden Gehäuseinnenwandung 52 aufgebaut. In der Gehäuseinnenwandung 52 ist eine Einlassöffnung 54 ausgebildet, über welche der erste Mischkanal 28 zu dem im ersten Strömungsumlenkgehäuse 46 gebildeten ersten Strömungsumlenkvolumen 50 offen ist. In der Gehäuseinnenwandung 52 ist ferner eine Auslassöffnung 56 gebildet, über welche das erste Strömungsumlenkvolumen 50 zu einem stromaufwärtigen Endbereich 58 der ersten Abgasbehandlungsanordung 22 offen ist.

Die erste Abgasbehandlungsanordnung 22 umfasst in einem beispielsweise wenigstens bereichsweise doppelwandig ausgebildeten ersten Abgasbehandlungsanordnungsgehäuse 60 drei in Richtung einer ersten Abgasbehandlungsanordnungsanordnung A₁ aufeinanderfolgende Abgasbehandlungseinheiten 62, 63, 64. Jede dieser Abgasbehandlungseinheiten kann einen in einem Mantel getragenen beispielsweise monolithisch aufgebauten Abgasbehandlungsblock mit poröser Struktur umfassen, der beispielsweise mit katalytisch wirksamem Material beschichtet oder/und aufgebaut ist. In der in Fig. 6 dargestellten Anordnung kann beispielsweise die am weitesten stromaufwärts positionierte Abgasbehandlungseinheit 62 eine SCR-Katalysatoreinheit sein. Die in Strömungsrichtung dann folgende Abgasbehandlungseinheit 63 kann eine Diesel-Oxidationskatalysatoreinheit sein, und die in der ersten Abgasbehandlungsanordnung 22 am weitesten stromabwärts positionierte Abgasbehandlungseinheit 64 kann eine Partikelfiltereinheit sein.

Die SCR-Katalysatoreinheit und Diesel-Oxidationskatalysatoreinheit können zusammen beispielsweise unter Verwendung einer diese jeweils umgebenden Fasermateriallage in einem gemeinsamen Mantel getragen sein, der im Bereich des stromaufwärtigen Endbereichs 58 der ersten Abgasbehandlungsanordnung 62 in das erste Abgasbehandlungsanordnungsgehäuse 60 eingesetzt sein kann. In dem diesem stromaufwärtigen Endbereich 58 gegenüberliegenden Bereich kann an der Gehäuseaußenwandung 48 des ersten Strömungsumlenkgehäuses 46 ein lösbar angebrachter, eine Öffnung abschließender Deckel 49 getragen sein, über welchen Zugriff auf die die beiden Abgasbehandlungseinheiten 62, 63 und den diese umgebenden Mantel umfassende Baugruppe besteht. Durch den Deckel 49 kann diese Baugruppe am ersten Strömungsumlenkgehäuse und somit auch in dem ersten Abgasbehandlungsanordnungsgehäuse 60 gehalten sein.

Die die beiden Abgasbehandlungseinheiten 62, 63 umfassende Baugruppe kann somit insbesondere dann, wenn die als SCR-Katalysatoreinheit ausgebildete Abgasbehandlungseinheit 62 das Ende ihrer Betriebslebensdauer erreicht hat, durch Entfernen des Deckels 49 aus der ersten Abgasbehandlungsanordnung 22 herausgenommen und durch eine entsprechende neue Baugruppe ersetzt werden. Diese Baugruppe bzw. die am weitesten stromaufwärts positionierte Abgasbehandlungseinheit 62 ist den von einer Brennkraftmaschine ausgestoßenen, vergleichsweise heißen Abgasen deutlich stärker ausgesetzt, als alle anderen Abgasbehandlungseinheiten, von welchen angenommen werden kann, dass sie über die gesamte Betriebslebensdauer des Abgasbehandlungsmoduls 12 nicht ersetzt werden müssen.

Die beiden Abgasbehandlungseinheiten 62, 63 könnten auch voneinander entkoppelt als separate Baugruppen, beispielsweise jeweils mit einem Mantel, bereitgestellt sein, wobei dann die Abgasbehandlungseinheit 63, ebenso wie beispielsweise auch die weiter stromabwärts folgende Abgasbehandlungseinheit 64, mit einem einen jeweiligen Abgasbehandlungsblock umgebenden Mantel im ersten Abgasbehandlungsanordnungsgehäuse 60 fest verbaut sein kann.

An einen stromabwärtigen Endbereich 66 der ersten Abgasbehandlungsanordnung 22 schließt ein zweites Strömungsumlenkgehäuse 68 an. Auch dieses ist mit einer beispielsweise schalenartig ausgebildeten Gehäuseaußenwandung 70 und einer beispielsweise plattenartig ausgebildeten Gehäuseinnenwandung 72 aufgebaut. Durch eine in der Gehäuseinnenwandung 72 ausgebildete Einlassöffnung 74 ist die erste Abgasbehandlungsanordnung 22 zu einem in dem zweiten Strömungsumlenkgehäuse 68 gebildeten zweiten Strömungsumlenkvolumen 76 offen. Dabei ist darauf hinzuweisen, dass beispielsweise das erste Abgasbehandlungsanordnungsgehäuse 60 an die Gehäuseinnenwandung 52 des ersten Strömungsumlenkgehäuses 46 oder/und die Gehäuseinnenwandung 72 des zweiten Strömungsumlenkgehäuses 68 anschließend bzw. in die Auslassöffnung 56 bzw. die Einlassöffnung 74 eingreifend positioniert sein kann und mit der jeweiligen Gehäuseinnenwandung 52 bzw. 72 zum Bereitstellen eines gasdichten Abschlusses beispielsweise durch Verschweißung verbunden sein kann.

Über eine in der Gehäuseinnenwandung 72 des zweiten Strömungsumlenkgehäuses 68 ausgebildete Auslassöffnung 78 ist das im zweiten Strömungsumlenkgehäuse 68 gebildete zweite Strömungsumlenkvolumen 76 zu einem stromaufwärtigen Endbereich 80 der zweiten Mischstrecke 24 offen. Die zweite Mischstrecke 24 umfasst ein einwandig oder doppelwandig ausgebildetes zweites Mischstreckenrohr 82 mit einem darin ausgebildeten zweiten Mischkanal 84. Das zweite Mischstreckenrohr 82 bzw. der darin ausgebildete zweite Mischkanal 84 ist in Richtung einer zweiten Mischstreckenlängsachse M₂ der zweiten Mischstrecke 24 langgestreckt.

An der Gehäuseaußenwandung 70 des zweiten Strömungsumlenkgehäuses 68 ist eine allgemein als Injektor bezeichnete zweite Reaktionsmittelabgabeanordnung 86 derart getragen, dass sie ein Reaktionsmittel R₂ in einer zweiten Reaktionsmittel-Hauptabgaberichtung H₂ in den zweiten Mischkanal 84 abgibt. Dabei ist vorzugsweise die zweite Reaktionsmittelabgabeanordnung 86 derart positioniert und orientiert, dass die zweite Reaktionsmittel-Hauptabgaberichtung H₂ im Wesentlichen parallel zur zweiten Mischstreckenlängsachse M₂ ist bzw. dieser entspricht, und dass das Reaktionsmittel R₂ quer bezüglich der zweiten Mischstreckenlängsachse M₂ im Wesentlichen in einen mittigen Bereich des zweiten Mischkanals 84 eingespritzt wird.

In einem stromabwärtigen Endbereich 88 der zweiten Mischstrecke 24 schließt das zweite Mischstreckenrohr 82 an ein drittes Strömungsumlenkgehäuse 90 an. Das dritte Strömungsumlenkgehäuse 90 ist mit einer beispielsweise schalenartig aufgebauten Gehäuseaußenwandung 92 und einer beispielsweise plattenartig ausgebildeten Gehäuseinnenwandung 94 aufgebaut, die in einem Randbereich beispielsweise durch Verschweißung miteinander gasdicht verbunden sein können. In der Gehäuseinnenwandung 94 ist eine Einlassöffnung 96 ausgebildet, über welche der zweite Mischkanal 84 zu einem in dem dritten Strömungsumlenkgehäuse 90 ausgebildeten dritten Strömungsumlenkvolumen 98 offen ist.

In der Gehäuseinnenwandung 94 des dritten Strömungsumlenkgehäuses 90 ist eine Auslassöffnung 100 ausgebildet, über welche das im dritten Strömungsumlenkgehäuse 90 gebildete dritte Strömungsumlenkvolumen 98 zu einem stromaufwärtigen Endbereich 102 der zweiten Abgasbehandlungsanordnung 26 offen ist. Die zweite Abgasbehandlungsanordnung 26 umfasst ein zweites Abgasbehandlungsanordnungsgehäuse 104, welches beispielsweise zumindest bereichsweise doppelwandig ausgebildet sein kann und in welchem beispielsweise zwei in Richtung einer zweiten Abgasbehandlungsanordnungslängsachse A₂ aufeinanderfolgend angeordnete Abgasbehandlungseinheiten 106, 108 angeordnet sein können. Jede der Abgasbehandlungseinheiten 106, 108 kann eine SCR-Katalysatoreinheit sein mit einem beispielsweise monolithisch aufgebauten und mit katalytisch wirksamem Material beschichteten oder/und aufgebauten Abgasbehandlungsblock, der entweder direkt in dem zweiten Abgasbehandlungsanordnungsgehäuse 104, beispielsweise unter Verwendung einer Fasermatte oder dergleichen, getragen sein kann oder in einem in dem zweiten Abgasbehandlungsanordnungsgehäuse 104 aufgenommenen Mantel getragen sein kann.

An einem stromabwärtigen Endbereich 110 der zweiten Abgasbehandlungsanordnung 26 schließt an das zweite Abgasbehandlungsanordnungsgehäuse 104 ein Abschlussdeckel 112 an, in welchem die Abgasauslassöffnung 18 des Abgasbehandlungsmoduls 12 bereitgestellt ist und über welchen das Abgas mit einem geminderten Schadstoffgehalt das Abgasbehandlungsmoduls 12 verlässt.

Den Fig. 1 bis 6 zu entnehmen, dass in dem Abgasbehandlungsmodul 12 die verschiedenen in der Abgasströmungsrichtung aufeinander folgenden Systembereiche, also die erste Mischstrecke 20, die erste Abgasbehandlungsanordnung 22, die zweite Mischstrecke 24 und die zweite Abgasbehandlungsanordnung 26, derart angeordnet sind, dass deren Längsachsen, also die erste Mischstreckenlängsachse M₁, die erste Abgasbehandlungsanordnungslängsachse A₁, die zweite Mischstreckenlängsachse M₂ und die zweite Abgasbehandlungsanordnungslängsachse A₂, zueinander und insbesondere auch zur Abgasbehandlungsmodullängsachse L im Wesentlichen parallel angeordnet sind. Ferner sind diese vier Systembereiche derart angeordnet, dass der stromaufwärtige Endbereich 32 der ersten Mischstrecke 20, der stromabwärtige Endbereich 66 der ersten Abgasbehandlungsanordnung 22, der stromaufwärtige Endbereich 80 der zweiten Mischstrecke 24 und der stromabwärtige Endbereich 110 der zweiten Abgasbehandlungsanordnung 10 im Wesentlichen im gleichen axialen Bereich bezüglich der Abgasbehandlungsmodullängsachse L und insbesondere auch im Wesentlichen im gleichen axialen Endbereich 114 des Abgasbehandlungsmoduls 12 positioniert sind. Gleichermaßen sind der stromabwärtige Endbereich 44 der ersten Mischstrecke 20, der stromaufwärtige Endbereich 58 der ersten Abgasbehandlungsanordnung 22, der stromabwärtige Endbereich 88 der zweiten Mischstrecke 24 und der stromaufwärtige Endbereich 102 der zweiten Abgasbehandlungsanordnung 26 im Wesentlichen im gleichen axialen Endbereich bezüglich der Abgasbehandlungsmodullängsachse L und insbesondere im gleichen, also dem anderen axialen Endbereich 116 des Abgasbehandlungsmoduls 12 positioniert. Dies trägt zu einer kompakten Bauart mit der vorangehend bereits erläuterten quaderartigen bzw. würfelartigen Struktur der Abgasbehandlungsanordnung 12 bei, in welcher die beiden Abgasbehandlungsanordnungen 22, 26 einander bezüglich der Abgasbehandlungsmodullängsachse L im Wesentlichen diametral gegenüberliegen, und auch die beiden Mischstrecken 20, 24 einander bezüglich der Abgasbehandlungsmodullängsachse L im Wesentlichen diametral gegenüberliegen. Somit ergibt sich eine Struktur, bei welcher in Umfangsrichtung um die Abgasbehandlungsmodullängsachse L die erste Mischstrecke 20, die erste Abgasbehandlungsanordnung 22, die zweite Mischstrecke 24 und die zweite Abgasbehandlungsanordnung 26 aufeinander folgen. Die beiden Mischstrecken 20, 24, welche quer zu ihren jeweiligen Mischstreckenlängsachsen M₁, M₂ eine geringere Ausdehnung aufweisen, als dies bei den beiden Abgasbehandlungsanordnungen 22, 26 jeweils bezüglich deren Abgasbehandlungsanordnungslängsachsen A₁, A₂ der Fall ist, können somit in den seitlich neben den einander gegenüberliegenden Abgasbehandlungsanordnungen 22, 26 gebildeten Raumbereichen 118, 120 untergebracht werden.

Bei der in den Fig. 1 bis 6 erkennbaren Bauart eines Abgasbehandlungsmoduls ist ferner dafür gesorgt, dass die beiden Reaktionsmittelabgabeanordnungen 42, 86, welche zueinander baugleich sein können, im Wesentlichen im gleichen axialen Bereich, insbesondere am gleichen axialen Endbereich 114 des Abgasbehandlungsmoduls 12 angeordnet sind. Dies ermöglicht eine einfach zu realisierende Verbindung der beiden Reaktionsmittelabgabeanordnungen 42, 86 mit einem Reaktionsmitteltank in einem Fahrzeug. Ferner besteht zur Durchführung von Wartungs- oder Reparaturarbeiten ein einfacher Zugriff auf beide Reaktionsmittelabgabeanordnungen 42, 86 von der gleichen axialen Seite des Abgasbehandlungsmoduls 12 her.

In dem Abgasbehandlungsmodul 12 können die beiden Mischstrecken 20, 24 bzw. die Mischstreckenrohre 30, 82 zueinander im Wesentlichen baugleich sein und können, zur Anpassung an verschiedene Bauarten in einfache Weise in ihrer Länge variiert werden. Auch die beiden Abgasbehandlungsanordnungen 22, 26 können zueinander im Wesentlichen baugleich sein und gleichermaßen in ihrer Länge leicht an verschiedene Einsatzzwecke angepasst werden. Da die beiden Abgasbehandlungsanordnungen 22, 26 keine durch deren Funktion bedingte direkte mechanische Verbindung miteinander aufweisen müssen, sondern über die beiden Strömungsumlenkgehäuse 68, 90 und die zweite Mischstrecke 24 miteinander gekoppelt sind, können diese grundsätzlich mit zueinander unterschiedlichen Längen ausgebildet sein. Eine Variation der Länge der zweiten Abgasbehandlungsanordnung 26 führt zu einer entsprechenden Variation in der Position der Auslassöffnung 18. Gleichermaßen führt eine Variation der Länge der ersten Abgasbehandlungsanordnung 22 zu einer entsprechenden Variation der Position des ersten Strömungsumlenkgehäuses 46. Auch die Länge der ersten Mischstrecke 20 ist im Wesentlichen frei wählbar, und eine Variation der Länge der ersten Mischstrecke 20 führt zu einer entsprechenden Variation der Position des Einlass-Strömungsumlenkgehäuses 34 insbesondere bezüglich des ersten Strömungsumlenkgehäuses 46. Beispielsweise kann bei der in den Fig. 1-6 dargestellten Ausgestaltung eine kürzere Ausgestaltung der ersten Mischstrecke 20 zu einem Aufbau führen, bei welchem der stromaufwärtige Endbereich 32 derselben weiter in einen axial zentralen Bereich des Abgasbehandlungsmoduls 12 verschoben ist.

Zur Einbindung eines derartigen Abgasbehandlungsmoduls 12 in ein Fahrzeug können beispielsweise die beiden Abgasbehandlungseinheiten 22, 26 mit Befestigungsstrukturen 122, 124 versehen sein, welche beispielsweise jeweils ein oder mehrere das jeweilige Abgasbehandlungsanordnungsgehäuse 60 bzw. 104 umgebende, gurtartige und beispielsweise mit Stahlmaterial oder dergleichen aufgebaute Befestigungsbänder umfassen können, die an jeweilige durch Verschraubung an einem Fahrzeug festzulegende Träger angebunden sein können.

Insbesondere bei Einsatz in Verbindung mit einer Diesel-Brennkraftmaschine kann das durch die Reaktionsmittelabgabeanordnungen 42, 86 in die Mischstrecken 20, 24 abgegebene Reaktionsmittel R₁, R₂ ein Gemisch aus Harnstoff und Wasser sein. Dabei können die Mengen des durch die Reaktionsmittelabgabeanordnungen 42, 86 jeweils abgegebenen Reaktionsmittels R₁, R₂ zueinander gleich sein oder können sich unter Berücksichtigung des Umstandes, dass das in die zweite Mischstrecke 24 gelangende Abgas bereits einen geminderten Stickoxidanteil aufweist, zueinander unterschiedlich sein.

## Patentansprüche

1. Abgasbehandlungsmodul für eine Abgasanlage einer Brennkraftmaschine, umfassend in einer Abgasströmungsrichtung aufeinander folgend:
- eine erste Mischstrecke (20) mit einer ersten Reaktionsmittelabgabeanordnung (42) in einem stromaufwärtigen Endbereich (32) der ersten Mischstrecke (20) und einem in Richtung einer ersten Mischstreckenlängsachse (M₁) langgestreckten ersten Mischkanal (28),
- eine in Richtung einer ersten Abgasbehandlungsanordnungslängsachse (A₁) langgestreckte, wenigstens eine SCR-Katalysatoreinheit umfassende erste Abgasbehandlungsanordnung (22) mit einem mit einem stromabwärtigen Endbereich (44) der ersten Mischstrecke (20) verbundenen stromaufwärtigen Endbereich (58),
- eine zweite Mischstrecke (24) mit einer zweiten Reaktionsmittelabgabeanordnung (86) in einem mit einem stromabwärtigen Endbereich (66) der ersten Abgasbehandlungsanordnung (22) verbundenen stromaufwärtigen Endbereich (80) der zweiten Mischstrecke (24) und einem in Richtung einer zweiten Mischstreckenlängsachse (M₂) langgestreckten zweiten Mischkanal (84),
- eine in Richtung einer zweiten Abgasbehandlungsanordnungslängsachse (A₂) langgestreckte, wenigstens eine SCR-Katalysatoreinheit umfassende zweite Abgasbehandlungsanordnung (26) mit einem mit einem stromabwärtigen Endbereich (88) der zweiten Mischstrecke (24) verbundenen stromaufwärtigen Endbereich (102) und einem zur Abgabe von Abgas oder/und Reaktionsmittel offenen stromabwärtigen Endbereich (110),
**dadurch gekennzeichnet, dass** die erste Mischstrecke (20), die erste Abgasbehandlungsanordnung (22), die zweite Mischstrecke (24) und die zweite Abgasbehandlungsanordnung (26) einander in Richtung der Abgasbehandlungsmodullängsachse (L) wenigstens bereichsweise überlappen, wobei die erste Reaktionsmittelabgabeanordnung (42) und die zweite Reaktionsmittelabgabeanordnung (86) bezüglich der Abgasbehandlungsmodullängsachse (L) im Wesentlichen im gleichen axialen Endbereich (114) des Abgasbehandlungsmoduls (12) angeordnet sind, und dass die erste Mischstrecke (20), die erste Abgasbehandlungsanordnung (22), die zweite Mischstrecke (24) und die zweite Abgasbehandlungsanordnung (26) um eine Abgasbehandlungsmodullängsachse (L) aufeinanderfolgend angeordnet sind, so dass die erste Mischstrecke (20) und die zweite Mischstrecke (24) einander bezüglich der Abgasbehandlungsmodullängsachse (L) im Wesentlichen diametral gegenüberliegen und die erste Abgasbehandlungsanordnung (22) und die zweite Abgasbehandlungsanordnung (26) einander bezüglich der Abgasbehandlungsmodullängsachse (L) im Wesentlichen diametral gegenüberliegen.

2. Abgasbehandlungsmodul nach Anspruch 1, **dadurch gekennzeichnet, dass** die erste Mischstreckenlängsachse (M₁), die erste Abgasbehandlungsanordnungslängsachse (A₁), die zweite Mischstreckenlängsachse (M₂) und die zweite Abgasbehandlungsanordnungslängsachse (A₂) zueinander oder/und zu der Abgasbehandlungsmodullängsachse (L) im Wesentlichen parallel sind.

3. Abgasbehandlungsmodul nach Anspruch 1 oder 2, **dadurch gekennzeichnet, dass** der stromaufwärtige Endbereich (32) der ersten Mischstrecke (20) oder/und der stromabwärtige Endbereich (66) der ersten Abgasbehandlungsanordnung (22) oder/und der stromaufwärtige Endbereich (80) der zweiten Mischstrecke (24) oder/und der stromabwärtige Endbereich (110) der zweiten Abgasbehandlungsanordnung (26) im Wesentlichen im gleichen axialen Bereich bezüglich der Abgasbehandlungsmodullängsachse (L) angeordnet sind, oder/und dass der stromabwärtige Endbereich (44) der ersten Mischstrecke (20) oder/und der stromaufwärtige Endbereich (58) der ersten Abgasbehandlungsanordnung (22) oder/und der stromabwärtige Endbereich (88) der zweiten Mischstrecke (24) oder/und der stromaufwärtige Endbereich (102) der zweiten Abgasbehandlungsanordnung (26) im Wesentlichen im gleichen axialen Bereich bezüglich der Abgasbehandlungsmodullängsachse (L) angeordnet sind.

4. Abgasbehandlungsmodul nach einem der vorangehenden Ansprüche, **dadurch gekennzeichnet, dass** ein den stromabwärtigen Endbereich (44) der ersten Mischstrecke (20) mit dem stromaufwärtigen Endbereich (58) der ersten Abgasbehandlungsanordnung (22) verbindendes erstes Strömungsumlenkgehäuse (46) vorgesehen ist, oder/und dass ein den stromabwärtigen Endbereich (66) der ersten Abgasbehandlungsanordnung (22) mit dem stromaufwärtigen Endbereich (80) der zweiten Mischstrecke (24) verbindendes zweites Strömungsumlenkgehäuse (68) vorgesehen ist, oder/und dass ein den stromabwärtigen Endbereich (88) der zweiten Mischstrecke (24) mit dem stromaufwärtigen Endbereich (102) der zweiten Abgasbehandlungsanordnung (26) verbindendes drittes Strömungsumlenkgehäuse (90) vorgesehen ist.

5. Abgasbehandlungsmodul nach Anspruch 4, **dadurch gekennzeichnet, dass** wenigstens ein, vorzugsweise jedes Strömungsumlenkgehäuse (46, 68, 90) von erstem Strömungsumlenkgehäuse (46), zweitem Strömungsumlenkgehäuse (68) und drittem Strömungsumlenkgehäuse (90) eine zusammen mit einer Gehäuseaußenwandung (48, 70, 92) ein Strömungsumlenkvolumen (50, 76, 98) begrenzende Gehäuseinnenwandung (52, 72, 94) umfasst, wobei in der Gehäuseinnenwandung (52, 72, 94) des wenigstens einen Strömungsumlenkgehäuses (46, 68, 90) eine zu dem Strömungsumlenkvolumen (50, 76, 98) führende Einlassöffnung (54, 74, 96) und eine aus dem Strömungsumlenkvolumen (50, 76, 96) führende Auslassöffnung (56, 78, 100) des wenigstens einen Strömungsumlenkgehäuses (46, 68, 90) vorgesehen sind.

6. Abgasbehandlungsmodul nach Anspruch 4 oder 5, **dadurch gekennzeichnet, dass** die zweite Reaktionsmittelabgabeanordnung (86) an dem zweiten Strömungsumlenkgehäuse (68) getragen ist.

7. Abgasbehandlungsmodul nach einem der vorangehenden Ansprüche, **dadurch gekennzeichnet, dass** der stromaufwärtige Endbereich (32) der ersten Mischstrecke (20) mit einem Einlass-Strömungsumlenkgehäuse (34) verbunden ist, und dass die erste Reaktionsmittelabgabeanordnung (42) an dem Einlass-Strömungsumlenkgehäuse (34) getragen ist.

8. Abgasbehandlungsmodul nach Anspruch 7, **dadurch gekennzeichnet, dass** das Einlass-Strömungsumlenkgehäuse (34) eine zusammen mit einer Gehäuseaußenwandung (36) ein Einlassvolumen (37) begrenzende Gehäuseinnenwandung (38) umfasst, wobei in der Gehäuseinnenwandung (38) des Einlass-Strömungsumlenkgehäuses (34) eine aus dem Einlassvolumen (37) in die erste Mischstrecke (20) führende Auslassöffnung (40) des Einlass-Strömungsumlenkgehäuses (34) vorgesehen ist und die erste Reaktionsmittelabgabeanordnung (42) an der Gehäuseaußenwandung (36) des Einlass-Strömungsumlenkgehäuses (34) getragen ist.

9. Abgasbehandlungsmodul nach einem der vorangehenden Ansprüche, **dadurch gekennzeichnet, dass** die erste Reaktionsmittelabgabeanordnung (42) dazu eingerichtet ist, Reaktionsmittel (R₁) im Wesentlichen in einer ersten Reaktionsmittel-Hauptabgaberichtung (H₁) in den ersten Mischkanal (28) abzugeben, wobei die erste Reaktionsmittel-Hauptabgaberichtung (H₁) im Wesentlichen in Richtung der ersten Mischstreckenlängsachse (M₁) orientiert ist oder/und die erste Reaktionsmittelabgabeanordnung (42) Reaktionsmittel (R₁) im Wesentlichen in einen zentralen Bereich des ersten Mischkanals (28) abgibt.

10. Abgasbehandlungsmodul nach einem der vorangehenden Ansprüche, **dadurch gekennzeichnet, dass** die zweite Reaktionsmittelabgabeanordnung (86) dazu eingerichtet ist, Reaktionsmittel (R₂) im Wesentlichen in einer zweiten Reaktionsmittel-Hauptabgaberichtung (H₂) in den zweiten Mischkanal (84) abzugeben, wobei die zweite Reaktionsmittel-Hauptabgaberichtung (H₂) im Wesentlichen in Richtung der zweiten Mischstreckenlängsachse (M₂) orientiert ist oder/und die zweite Reaktionsmittelabgabeanordnung (86) Reaktionsmittel (R₂) im Wesentlichen in einen zentralen Bereich des zweiten Mischkanals (84) abgibt.

11. Abgasbehandlungsmodul nach Anspruch 9 und Anspruch 10, **dadurch gekennzeichnet, dass** die erste Reaktionsmittel-Hauptabgaberichtung (H₁) und die zweite Reaktionsmittel-Hauptabgaberichtung (H₂) zueinander im Wesentlichen parallel und gleich orientiert sind.

12. Abgasbehandlungsmodul nach einem der vorangehenden Ansprüche, **dadurch gekennzeichnet, dass** die erste Abgasbehandlungsanordnung (22) wenigstens eine, vorzugsweise eine Mehrzahl von in Strömungsrichtung aufeinanderfolgend angeordneten Abgasbehandlungseinheiten (62, 63, 64) umfasst, oder/und dass die die zweite Abgasbehandlungsanordnung (26) wenigstens eine, vorzugsweise eine Mehrzahl von in Strömungsrichtung aufeinanderfolgend angeordneten Abgasbehandlungseinheiten (106, 108) umfasst.

13. Abgasbehandlungsanlage für ein Fahrzeug, umfassend wenigstens ein Abgasbehandlungsmodul (12) nach einem der vorangehenden Ansprüche.

## Claims

1. An exhaust-gas treatment module for an exhaust system of an internal combustion engine, comprising, following one another in an exhaust-gas flow direction:
- a first mixing path (20) with a first reactant dispensing arrangement (42) in an upstream end region (32) of the first mixing path (20) and with a first mixing channel (28) which is elongate in the direction of a first mixing path longitudinal axis (M₁),
- a first exhaust-gas treatment arrangement (22) which is elongate in the direction of a first exhaust-gas treatment arrangement longitudinal axis (A₁) comprising at least one SCR catalytic converter arrangement, with an upstream end region (58) connected to a downstream end region (44) of the first mixing path (20),
- a second mixing path (24) with a second reactant dispensing arrangement (86) in an upstream end region (80), which is connected to a downstream end region (66) of the first exhaust-gas treatment arrangement (22), of the second mixing path (24) and with a second mixing channel (84) which is elongate in the direction of a second mixing path longitudinal axis (M₂),
- a second exhaust-gas treatment arrangement (26) which is elongate in the direction of a second exhaust-gas treatment arrangement longitudinal axis (A₂) comprising at least one SCR catalytic converter arrangement, with an upstream end region (102) connected to a downstream end region (88) of the second mixing path (24) and which has a downstream end region (110) which is open for the release of exhaust gas and/or reactant,
**characterized in that** the first mixing path (20), the first exhaust-gas treatment arrangement (22), the second mixing path (24) and the second exhaust-gas treatment arrangement (26) overlap one another at least in certain regions in the direction of the exhaust-gas treatment module longitudinal axis (L), wherein the first reactant dispensing arrangement (42) and the second reactant dispensing arrangement (86) are arranged substantially in the same axial end region (114) of the exhaust-gas treatment module (12) with respect to the exhaust-gas treatment module longitudinal axis (L),
and **in that** the first mixing path (20), the first exhaust-gas treatment arrangement (22), the second mixing path (24) and the second exhaust-gas treatment arrangement (26) are arranged so as to follow one another around an exhaust-gas treatment module longitudinal axis (L), such that the first mixing path (20) and the second mixing path (24) are situated substantially diametrically opposite one another with respect to the exhaust-gas treatment module longitudinal axis (L) and the first exhaust-gas treatment arrangement (22) and the second exhaust-gas treatment arrangement (26) are situated substantially diametrically opposite one another with respect to the exhaust-gas treatment module longitudinal axis (L).

2. The exhaust-gas treatment module according to claim 1, **characterized in that** the first mixing path longitudinal axis (M₁), the first exhaust-gas treatment arrangement longitudinal axis (A₁), the second mixing path longitudinal axis (M₂) and the second exhaust-gas treatment arrangement longitudinal axis (A₂) are substantially parallel to one another and/or to the exhaust-gas treatment module longitudinal axis (L).

3. The exhaust-gas treatment module as claimed in claim 1 or 2, **characterized in that** the upstream end region (32) of the first mixing path (20) and/or the downstream end region (66) of the first exhaust-gas treatment arrangement (22) and/or the upstream end region (80) of the second mixing path (24) and/or the downstream end region (110) of the second exhaust-gas treatment arrangement (26) are arranged substantially in the same axial region with respect to the exhaust-gas treatment module longitudinal axis (L), and/or wherein the downstream end region (44) of the first mixing path (20) and/or the upstream end region (58) of the first exhaust-gas treatment arrangement (22) and/or the downstream end region (88) of the second mixing path (24) and/or the upstream end region (102) of the second exhaust-gas treatment arrangement (26) are arranged substantially in the same axial region with respect to the exhaust-gas treatment module longitudinal axis (L).

4. The exhaust-gas treatment module as claimed in any one of the preceding claims, **characterized in that** a first flow-diverting housing (46) is provided which connects the downstream end region (44) of the first mixing path (20) to the upstream end region (58) of the first exhaust-gas treatment arrangement (22), and/or **in that** a second flow-diverting housing (68) is provided which connects the downstream end region (66) of the first exhaust-gas treatment arrangement (22) to the upstream end region (80) of the second mixing path (24), and/or **in that** a third flow-diverting housing (90) is provided which connects the downstream end region (88) of the second mixing path (24) to the upstream end region (102) of the second exhaust-gas treatment arrangement (26).

5. The exhaust-gas treatment module as claimed in claim 4, **characterized in that** at least one, preferably each, flow-diverting housing (46, 68, 90) out of the first flow-diverting housing (46), the second flow-diverting housing (68) and the third flow-diverting housing (90) comprises a housing inner wall (52, 72, 94) which, together with a housing outer wall (48, 70, 92), delimits a flow-diverting volume (50, 76, 98), wherein the housing inner wall (52, 72, 94) of the at least one flow-diverting housing (46, 68, 90) has provided therein an inlet opening (54, 74, 96), which leads to the flow-diverting volume (50, 76, 98), and an outlet opening (56, 78, 100), which leads out of the flow-diverting volume (50, 76, 96), of the at least one flow-diverting housing (46, 68, 90).

6. The exhaust-gas treatment module as claimed in claim 4 or 5, **characterized in that** the second reactant dispensing arrangement (86) is supported on the second flow-diverting housing (68).

7. The exhaust-gas treatment module as claimed in any one of the preceding claims, **characterized in that** the upstream end region (32) of the first mixing path (20) is connected to an inlet flow-diverting housing (34), and **in that** the first reactant dispensing arrangement (42) is supported on the inlet flow-diverting housing (34).

8. The exhaust-gas treatment module as claimed in claim 7, **characterized in that** the inlet flow-diverting housing (34) comprises a housing inner wall (38) which, together with a housing outer wall (36), delimits an inlet volume (37), wherein the housing inner wall (38) of the inlet flow-diverting housing (34) has provided therein an outlet opening (40), which leads from the inlet volume (37) into the first mixing path (20), of the inlet flow-diverting housing (34), and the first reactant dispensing arrangement (42) is supported on the housing outer wall (36) of the inlet flow-diverting housing (34).

9. The exhaust-gas treatment module as claimed in any one of the preceding claims, **characterized in that** the first reactant dispensing arrangement (42) is configured to dispense reactant (R₁) substantially in a first reactant main dispensing direction (H₁) into the first mixing channel (28), wherein the first reactant main dispensing direction (H₁) is oriented substantially in the direction of the first mixing path longitudinal axis (M₁), and/or the first reactant dispensing arrangement (42) dispenses reactant (R₁) substantially into a central region of the first mixing channel (28).

10. The exhaust-gas treatment module as claimed in any one of the preceding claims, **characterized in that** the second reactant dispensing arrangement (86) is configured to dispense reactant (R₂) substantially in a second reactant main dispensing direction (H₂) into the second mixing channel (84), wherein the second reactant main dispensing direction (H₂) is oriented substantially in the direction of the second mixing path longitudinal axis (M₂), and/or the second reactant dispenses arrangement (86) dispensing reactant (R₂) substantially into a central region of the second mixing channel (84).

11. The exhaust-gas treatment module as claimed in claim 9 and claim 10, **characterized in that** the first reactant main dispensing direction (H₁) and the second reactant main dispensing direction (H₂) are oriented substantially parallel and identically to one another.

12. The exhaust-gas treatment module as claimed in any one of the preceding claims, **characterized in that** the first exhaust-gas treatment arrangement (22) comprises at least one, preferably a plurality of exhaust-gas treatment units (62, 63, 64) arranged so as to follow one another in a flow direction, and/or **in that** the second exhaust-gas treatment arrangement (26) comprises at least one, preferably a plurality of exhaust-gas treatment units (106, 108) arranged so as to follow one another in a flow direction.

13. An exhaust-gas treatment system for a vehicle, comprising at least one exhaust-gas treatment module (12) as claimed in any one of the preceding claims.

## Revendications

1. Un module de traitement des gaz d'échappement pour un système d'échappement d'un moteur à combustion interne, comprenant, de manière à se suivre dans une direction d'écoulement des gaz d'échappement :
- une première voie de mélange (20) avec un premier dispositif de distribution de réactif (42) dans une zone d'extrémité amont (32) de la première voie de mélange (20) et avec un premier canal de mélange (28) qui est allongé dans la direction d'un premier axe longitudinal de la voie de mélange (M₁),
- un premier dispositif de traitement des gaz d'échappement (22) allongé dans la direction d'un premier axe longitudinal du dispositif de traitement des gaz d'échappement (A₁) comprenant au moins un dispositif de convertisseur catalytique SCR, avec une zone d'extrémité amont (58) reliée à une zone d'extrémité aval (44) de la première voie de mélange (20),
- une deuxième voie de mélange (24) avec un deuxième dispositif de distribution de réactif (86) dans une zone d'extrémité amont (80), qui est reliée à une zone d'extrémité aval (66) du premier dispositif de traitement des gaz d'échappement (22), de la deuxième voie de mélange (24) et avec un deuxième canal de mélange (84) qui est allongé dans la direction de l'axe longitudinal de la deuxième voie de mélange (M₂),
- un deuxième dispositif de traitement des gaz d'échappement (26) allongé dans la direction d'un deuxième axe longitudinal du dispositif de traitement des gaz d'échappement (A₂) comprenant au moins un dispositif de convertisseur catalytique SCR, avec une zone d'extrémité amont (102) reliée à une zone d'extrémité aval (88) de la deuxième voie de mélange (24) et qui a une zone d'extrémité aval (110) ouverte pour l'émission de gaz d'échappement et/ou de réactif,
**caractérisé en ce que** la première voie de mélange (20), le premier dispositif de traitement des gaz d'échappement (22), la deuxième voie de mélange (24) et le deuxième dispositif de traitement des gaz d'échappement (26) se chevauchent au moins dans certaines régions en direction de l'axe longitudinal du module de traitement des gaz d'échappement (L), dans lequel le premier dispositif de distribution de réactif (42) et le deuxième dispositif de distribution de réactif (86) sont disposés essentiellement dans la même région d'extrémité axiale (114) du module de traitement des gaz d'échappement (12) par rapport à l'axe longitudinal du module de traitement des gaz d'échappement (L),
et **en ce que** la première voie de mélange (20), le premier dispositif de traitement des gaz d'échappement (22), la deuxième voie de mélange (24) et le deuxième dispositif de traitement des gaz d'échappement (26) sont disposés de manière à se suivre autour de l'axe longitudinal de module de traitement des gaz d'échappement (L), de telle sorte que la première voie de mélange (20) et la deuxième voie de mélange (24) sont situées de manière essentiellement diamétralement opposée l'une à l'autre par rapport à l'axe longitudinal du module de traitement des gaz d'échappement (L) et que le premier dispositif de traitement des gaz d'échappement (22) et le deuxième dispositif de traitement des gaz d'échappement (26) sont situés de manière essentiellement diamétralement opposée l'un à l'autre par rapport à l'axe longitudinal du module de traitement des gaz d'échappement (L).

2. Le module de traitement des gaz d'échappement selon la revendication 1, **caractérisé en ce que** le premier axe longitudinal de la voie de mélange (M₁), le premier axe longitudinal du dispositif de traitement des gaz d'échappement (A₁), le deuxième axe longitudinal de la voie de mélange (M₂) et le deuxième axe longitudinal du dispositif de traitement des gaz d'échappement (A₂) sont essentiellement parallèles l'un à l'autre et/ou à l'axe longitudinal du module de traitement des gaz d'échappement (L).

3. Le module de traitement des gaz d'échappement selon la revendication 1 ou 2, **caractérisé en ce que** la région d'extrémité amont (32) de la première voie de mélange (20) et/ou la région d'extrémité aval (66) du premier dispositif de traitement des gaz d'échappement (22) et/ou la région d'extrémité amont (80) de la deuxième voie de mélange (24) et/ou la région d'extrémité aval (110) du deuxième dispositif de traitement des gaz d'échappement (26) sont disposées essentiellement dans la même région axiale par rapport à l'axe longitudinal du module de traitement des gaz d'échappement (L), et/ou dans lequel la région d'extrémité aval (44) de la première voie de mélange (20) et/ou la région d'extrémité amont (58) du premier dispositif de traitement des gaz d'échappement (22) et/ou la région d'extrémité aval (88) de la deuxième voie de mélange (24) et/ou la région d'extrémité amont (102) du deuxième dispositif de traitement des gaz d'échappement (26) sont disposées essentiellement dans la même région axiale par rapport à l'axe longitudinal du module de traitement des gaz d'échappement (L).

4. Le module de traitement des gaz d'échappement selon l'une quelconque des revendications précédentes, **caractérisé en ce qu'**un premier boîtier de dérivation du flux (46) est prévu reliant la zone d'extrémité aval (44) de la première voie de mélange (20) à la zone d'extrémité amont (58) du premier dispositif de traitement des gaz d'échappement (22), et/ou **en ce qu'**un deuxième boîtier de dérivation du flux (68) relie la zone d'extrémité aval (66) du premier dispositif de traitement des gaz d'échappement (22) à la zone d'extrémité amont (80) de la deuxième voie de mélange (24), et/ou **en ce qu'**un troisième boîtier de dérivation du flux (90) relie la zone d'extrémité aval (88) de la deuxième voie de mélange (24) à la zone d'extrémité amont (102) du deuxième dispositif de traitement des gaz d'échappement (26).

5. Le module de traitement des gaz d'échappement selon la revendication 4, **caractérisé en ce qu'**au moins un, de préférence chaque, boîtier de dérivation du flux (46, 68, 90) parmi le premier boîtier de dérivation du flux (46), le deuxième boîtier de dérivation du flux (68) et le troisième boîtier de dérivation du flux (90) comprend une paroi intérieure de boîtier (52, 72, 94) qui, conjointement avec une paroi extérieure de boîtier (48, 70, 92), délimite un volume de dérivation du flux (50, 76, 98), dans lequel la paroi intérieure (52, 72, 94) du au moins un boîtier de dérivation du flux (46, 68, 90) comporte une ouverture d'entrée (54, 74, 96), qui mène au volume de dérivation du flux (50, 76, 98), et une ouverture de sortie (56, 78, 100), qui mène hors du volume de dérivation du flux (50, 76, 96), dudit au moins un boîtier de dérivation du flux (46, 68, 90).

6. Le module de traitement des gaz d'échappement selon la revendication 4 ou 5, **caractérisé en ce que** le deuxième dispositif de distribution de réactif (86) est supporté par le deuxième boîtier de dérivation du flux (68).

7. Le module de traitement des gaz d'échappement selon l'une quelconque des revendications précédentes, **caractérisé en ce que** la zone d'extrémité amont (32) de la première voie de mélange (20) est reliée à un boîtier de dérivation du flux d'entrée (34), et **en ce que** le premier dispositif de distribution de réactif (42) est supporté par le boîtier de dérivation du flux d'entrée (34).

8. Module de traitement des gaz d'échappement selon la revendication 7, **caractérisé en ce que** le boîtier de dérivation du flux d'entrée (34) comprend une paroi intérieure de boîtier (38) qui, avec une paroi extérieure de boîtier (36), délimite un volume d'entrée (37), dans lequel la paroi intérieure de boîtier (38) du boîtier de dérivation du flux d'entrée (34) est pourvue d'une ouverture de sortie (40), qui débouche du volume d'entrée (37) dans la première voie de mélange (20) du boîtier de dérivation du flux d'entrée (34), et le premier dispositif de distribution de réactif (42) repose sur la paroi extérieure (36) du boîtier de dérivation du flux d'entrée (34).

9. Le module de traitement des gaz d'échappement selon l'une quelconque des revendications précédentes, **caractérisé en ce que** le premier dispositif de distribution de réactif (42) est configuré pour distribuer le réactif (R₁) essentiellement dans une première direction de distribution principale de réactif (H₁) dans le premier canal de mélange (28), dans lequel la première direction de distribution principale de réactif (H₁) est orientée essentiellement dans la direction du premier axe longitudinal de voie de mélange (M₁), et/ou le premier dispositif de distribution de réactif (42) distribue le réactif (R₁) essentiellement dans une région centrale du premier canal de mélange (28).

10. Module de traitement des gaz d'échappement selon l'une quelconque des revendications précédentes, **caractérisé en ce que** le deuxième dispositif de distribution de réactif (86) est configuré pour distribuer le réactif (R₂) essentiellement dans une deuxième direction principale de distribution de réactif (H₂) dans le deuxième canal de mélange (84), dans lequel la deuxième direction principale de distribution de réactif (H₂) est orientée essentiellement dans la direction de l'axe longitudinal de la deuxième voie de mélange (M₂), et/ou le deuxième dispositif de distribution de réactif (86) distribue le réactif (R₂) essentiellement dans une région centrale du deuxième canal de mélange (84).

11. Module de traitement des gaz d'échappement selon la revendication 9 et la revendication 10, **caractérisé en ce que** la première direction de distribution principale de réactif (H₁) et la deuxième direction de distribution principale de réactif (H₂) sont orientées de manière essentiellement parallèle et identique l'une par rapport à l'autre.

12. Module de traitement des gaz d'échappement selon l'une quelconque des revendications précédentes, **caractérisé en ce que** le premier dispositif de traitement des gaz d'échappement (22) comprend au moins une, de préférence une pluralité d'unités de traitement des gaz d'échappement (62, 63, 64) disposées de manière à se suivre dans une direction d'écoulement, et/ou **en ce que** le deuxième dispositif de traitement des gaz d'échappement (26) comprend au moins une, de préférence une pluralité d'unités de traitement des gaz d'échappement (106, 108) disposées de manière à se suivre dans une direction d'écoulement.

13. Système de traitement des gaz d'échappement pour véhicule, comprenant au moins un module de traitement des gaz d'échappement (12) selon l'une quelconque des revendications précédentes.
